# EUROPEAN PATENT SPECIFICATION

(11) **EP 3 785 826 B1**
(45) Date of publication and mention of the grant of the patent: **06.04.2022**
(21) Application number: 19213526.7
(22) Date of filing: 04.12.2019
(51) Int. Cl.: B22F 3/105, B33Y 10/00, B33Y 30/00, B33Y 50/02, B22F 10/28, B22F 10/47, B22F 10/50, B22F 12/20, B22F 12/30

(54) **TEMPERATURE CONTROL FOR ADDITIVE MANUFACTURING**
TEMPERATURREGELUNG FÜR ADDITIVE HERSTELLUNG
CONTRÔLE DE LA TEMPÉRATURE POUR LA FABRICATION ADDITIVE

(30) Priority: 27.08.2019 US 201916551903
(43) Date of publication of application: 03.03.2021
(73) Proprietor: Delavan, Inc., West Des Moines, IA 50265 (US)
(72) Inventor: RYON, Jason A., Carlisle, IA Iowa 50047 (US); GREENFIELD, Jacob, Granger, IA Iowa 50109 (US); REYNOLDS, Shawn Karl, Byron, IL Illinois 61010 (US); PUJAR, Vijay V., San Diego, CA California 92127 (US)
(74) Representative: Dehns

(56) References cited:
- WO-A1-2019/094262
- US-A1- 2006 118 532
- US-A1- 2016 107 263

## Description

### BACKGROUND

### 1. Field

The present disclosure relates to additive manufacturing, and more particularly to temperature control during additive manufacturing.

### 2. Description of Related Art

During additive manufacturing processes such as selective laser sintering or electron beam melting of metal, there are considerable temperature dynamics as a melt pool is formed and solidified. Without temperature control, and as different regions of the work piece may be at different temperatures during the additive manufacturing process, there can be residual stresses formed in work pieces. One way of eliminating the residual stresses is to post-process, e.g., by heat treating, work pieces produced by additive manufacturing. However, the relief in residual stress by post-process heat-treating may result in permanent deformation of the work piece. Another way is to control the temperature of the build plate while the build is in progress. This can involve heating or cooling the build plate as needed to obtain the desired effect.

The conventional techniques have been considered satisfactory for their intended purpose for certain work pieces. However, there is an ever present need for improved systems and methods for temperature control during additive manufacturing. This disclosure provides a solution for this need. US 2016/107263 A1 relates to a method for generating a three-dimensional component by selective laser melting. WO 2019/094262 A1 relates to a method for making objects from powder.

### SUMMARY

A method according to the invention is defined in claim 1. The method can include removing the temperature control channel from the build after completion of the build.

The build in progress can include multiple identical work pieces in progress, and additively manufacturing the temperature control channel can include forming the temperature control channel passing in a back and forth pattern between rows of the work pieces in progress. Additively manufacturing the temperature control channel can include building the temperature control channel one layer at a time while additively manufacturing the build.

Additively manufacturing the temperature control channel can include forming the temperature control channel with an inlet of the temperature control channel connected to a fluid inlet port defined in the build plate, and forming the temperature control channel with an outlet of the temperature control channel connected to a fluid outlet port defined in the build plate. Flowing fluid through the temperature control channel can include flowing fluid into the temperature control channel through the fluid inlet port and flowing fluid out of the temperature control channel through the fluid outlet port. Powder within the temperature control channel can be removed by flowing fluid through the temperature control channel, e.g., flowing the fluid through the fluid inlet port and removing the powder out through the fluid outlet port.

The temperature control channel can be a first temperature control channel, and the method can include additively manufacturing at least one additional temperature control channel as part of the build in progress, wherein each of the temperature control channels is formed successively further and further from the build plate to provide temperature control at successively higher levels in the build in progress. Each of the temperature control channels can be formed in a respective additively manufactured build plate formed as part of the build, wherein at least one work piece is formed between respective ones of the build plates.

The method can include forming, through additive manufacturing, thermally conductive connectors connecting between the temperature control channel and a portion of the build spaced apart from the temperature control channel for heat transfer between the temperature control channel and the portion of the build.

Additively manufacturing support structure into the build can include forming multiple levels of support structure, each level of support structure provided at a level in the build to support a level of work pieces within the build, wherein portions of the fluid channel at a first level are connected to one another in an end to end manner to form a respective fluid circuit. An additional respective fluid channel can be formed for each level above the first level. The method can include removing the support structure after completion of the build.

An additive manufacturing system according to the invention is defined in claim 9.

The temperature control system can be in fluid communication with the temperature control channel to flow fluid therethrough to control temperature of the build. The system can include at least one additional fluid circuit defined in the build, wherein each of the fluid circuits is in fluid communication with the temperature control system for circulating fluid therethrough. The temperature control channel can fluidly connect with the temperature control system through a fluid inlet port and a fluid outlet port, each defined in the build platform. The temperature control system can be configured to remove powder within the temperature control channel by flowing fluid through the temperature control channel through fluid inlet port and removing powder through the fluid outlet port. It is also contemplated that the temperature control channel can include a resistive heating element and/or an inductive heating element.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Figs. 1-3 is a schematic perspective view of an embodiment , not forming part of the invention, of a system constructed in accordance with the present disclosure, showing a plurality of additive manufactured work pieces on a build plate with a plurality of fluid channels in the build for temperature control;
Fig. 4 is a schematic perspective view of an embodiment , not forming part of the invention, of a system constructed in accordance with the present disclosure, showing a plurality of additively manufactured build plates (shown as transparent for sake of clarity) as part of a build, each with a respective fluid channel for temperature control;
Fig. 5 is a schematic perspective view of an embodiment , according to the invention, of a system constructed in accordance with the present disclosure, showing thermally conductive connectors connecting between the fluid channel and a portion of the build spaced apart from the fluid channel;
Fig. 6 is a cross-sectional schematic perspective view of an embodiment of a system constructed according to the invention, showing support structure in a build that incorporates fluid channels for temperature control;
Fig. 7 is a schematic perspective view of the system of Fig. 6, showing the input and output tubes for the fluid channels; and
Fig. 8 is a schematic perspective view of the system of Fig. 6, showing fluid channels connected one another in an end to end manner to form a respective fluid circuit.

### DETAILED DESCRIPTION OF THE PREFERRED EMBODIMENTS

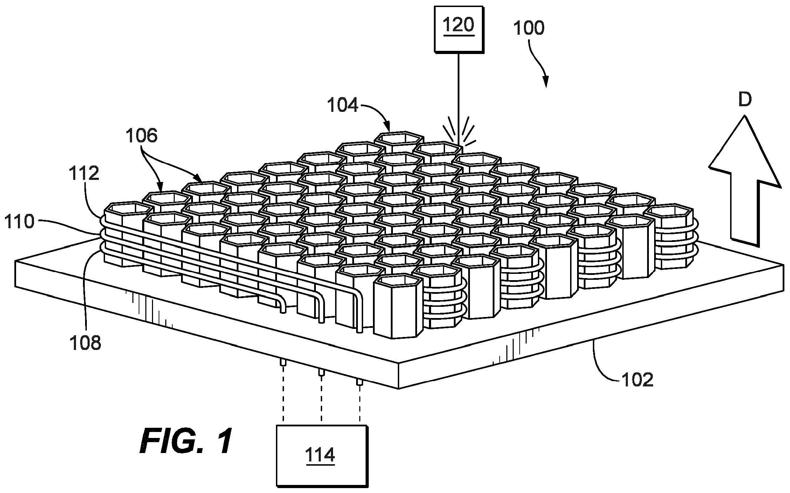

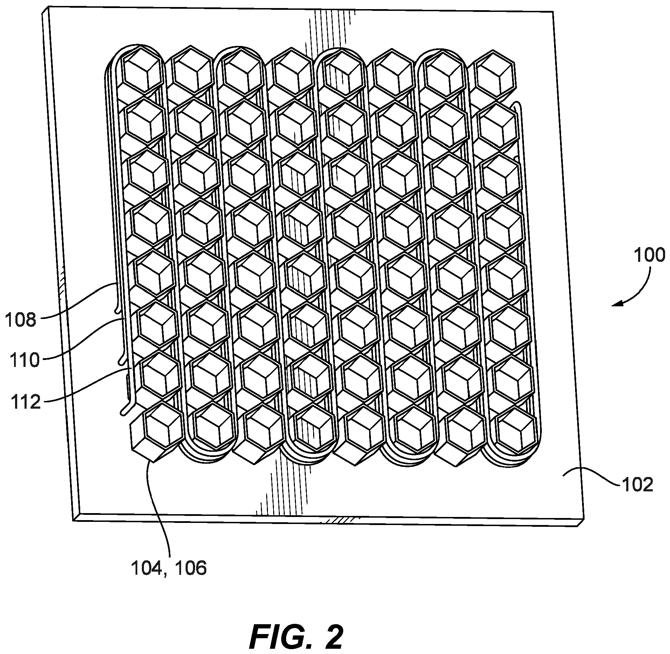

Reference will now be made to the drawings wherein like reference numerals identify similar structural features or aspects of the subject disclosure. For purposes of explanation and illustration, and not limitation, a partial view of an embodiment , not forming part of the invention, of a system in accordance with the disclosure is shown in Fig. 1 and is designated generally by reference character 100. Other embodiments of systems in accordance with the disclosure, or aspects thereof, are provided in Figs. 2-8, as will be described. The systems and methods described herein can be used to provide temperature control within a build during additive manufacturing.

The additive manufacturing system 100 includes a build platform 102 and a build 104 additively manufactured onto the build platform 102. The build 104 is shown in Fig. 1 as a build in progress, and includes multiple identical work pieces 106 in progress, however those skilled in the art will readily appreciate that the build 104 can include any suitable work piece or work pieces. The build 104 includes three fluid channels 108, 110, 112. A temperature control system 114 is in fluid communication with the fluid channels 108, 110, 112 to flow fluid therethrough to control temperature of the build 104. During the additive manufacturing of the build 104 (e.g. by selective laser melting or sintering) the fluid channels 108, 110, 112 are each built additively one layer at a time with the rest of the build 104 while additively manufacturing the build 104. As shown in Fig. 2, the forming the fluid channels 108, 110, 112 includes forming the fluid channels 108, 110, 112 passing in a back and forth pattern between rows of the work pieces 106 in progress. Those skilled in the art will readily appreciate that any suitable number of fluid channels can be used, and that any suitable pattern for those fluid channels, including branching patterns, can be used for a given build without departing from the scope of this disclosure.

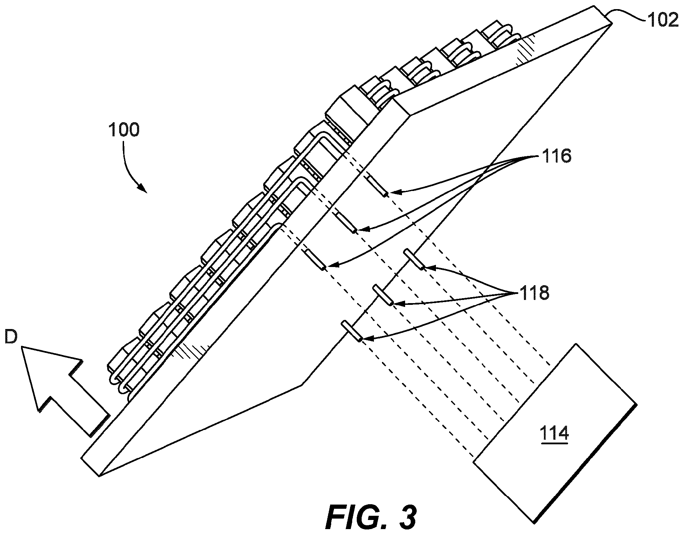

With reference to Fig. 3, each of the fluid channels 108, 110, 112 fluidly connect with the temperature control system 114 through a respective fluid inlet port 116 and a respective fluid outlet port 118, each defined in and through the build platform 102. The temperature control system 114 can control flow of fluid through the fluid channels 108, 110, 112 while the build 104 continues. This provides temperature control for the build 104 while the build 104 is in progress. Flowing fluid through the fluid channel can include flowing heating or cooling fluid (as needed for the intended temperature control for the specific application) into the fluid channels 108, 110, 112 through the fluid inlet ports 116 and flowing fluid out of the fluid channel through the fluid outlet ports 118.

During a build process, initial layers of the build 104 are deposited onto the build plate 102, with the initial connection (inlet or outlet) of the fluid channels 108, 110, 112 being formed in fluid communication with the fluid inlet and outlet ports 116, 118. In the build 104 shown in Figs. 1-3, the build 104 is built layer by layer in the build direction D indicated by the large arrow in Figs. 1 and 3 (for reference, the z axis of an xyz coordinate system is typically used for the build direction designation). The fluid channel 108 is the first to be completed as the build 104 progresses in the build direction D. Once the fluid channel 108 is completed, it can be cleared, e.g., by removing unfused stock powder with a blast of compressed air or vacuum through the fluid channel 108, and then connected in fluid communication with the temperature controller 114 to control temperature during the build 104 as it progresses to the completion of the next fluid channel 110, which is further from the build plate 102. Other methods of clearing the fluid channels 108, 110, 112 can include high pressure fluids or slurries flowing therethrough (e.g., flowing the fluid through the fluid inlet port 116 and removing the powder out through the fluid outlet port 118), running a wire or rotary brush therethrough, pushing a flexible tube therethrough, which is connected to a vacuum, or any other suitable process or combination of processes. The process is then repeated for the fluid channels 110, 112, and additional fluid channels even further from the build plate 102, if there are any. By continually providing more fluid channels in successively higher levels in the build in progress (relative to the build direction D), the temperatures can be controlled much closer to the laser 120 (indicated in Fig. 1) as it fuses the layers onto the build 104, than would be possible if the fluid channels were confined to be all within the build plate 102 itself. When additive manufacture of the build 104 is completed, the fluid channels 108, 110, 112 can be removed from the build 104, and the individual work pieces 106 can be separated from one another.

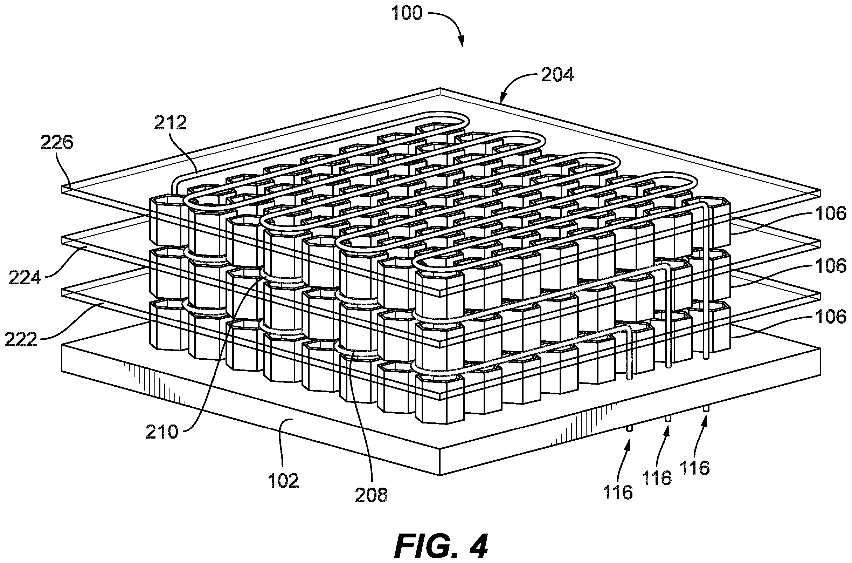

With reference now to Fig. 4, another build 204 is shown in which each of the fluid channels 208, 210, 212 is formed in a respective additively manufactured build plate 222, 224, 226 formed as part of the build 204. At least one work piece 106 is formed between respective ones of the build plates 222, 224, 226, and at least one work piece 106 is formed between the main build plate 102 and the first of the additively manufactured build plates 222, 224, 226. This configuration allows similar temperature control as that described above with respect to Figs. 1-3. The fluid channels 208, 210, 212 can be removed from the build 204 by removal of the work pieces 106 from the build plates 102, 222, 224, 226 after the build 204 is complete. While not shown, those skilled in the art will readily appreciate that overhanging portions of the build plates 222, 224, 226, can be supported with support structures that are formed as part of the build 204. Having multiple fluid channels and respective inlet and outlet ports in a build plate allows for independent temperature control for the regions proximate each fluid channel. For instance one fluid channel can have hot gas flowing through one pair of inlet and outlet ports in one region of a build and cooler gas can be flowing through another channel with its pair of inletoutlet ports to independently control the temperature in another region of the build. It is also contemplated that each part or a subgroup of parts on a build plate can have its/their own fluid inlet and outlet ports and associated temperature control channels and temperature control circuit to control the temperature of the part or group of parts during a build.

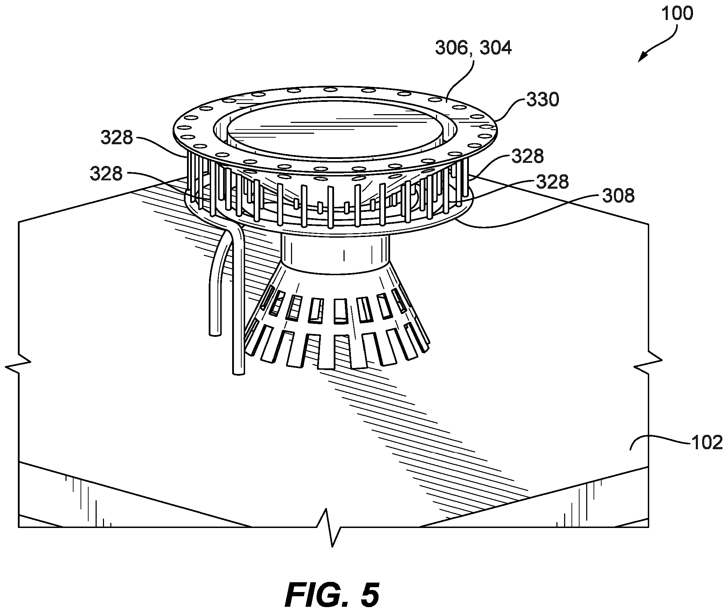

With reference now to Fig. 5, another build 304 is shown with a single work piece 306 being built in process. The build 304 includes a fluid channel 308 that is formed additively in thermal communication with thermally conductive connectors 328 connecting between the fluid channel 308 and a portion 330 of the build 304 spaced apart from the fluid channel 308 for heat transfer between the fluid channel 308 and the portion 330 of the build 304. A temperature control system 114 (shown in Fig. 1) can control the temperature of the portion 330 of the build by conducting heat through the connectors 328 and into or out of the fluid circulating in the fluid channel 308.

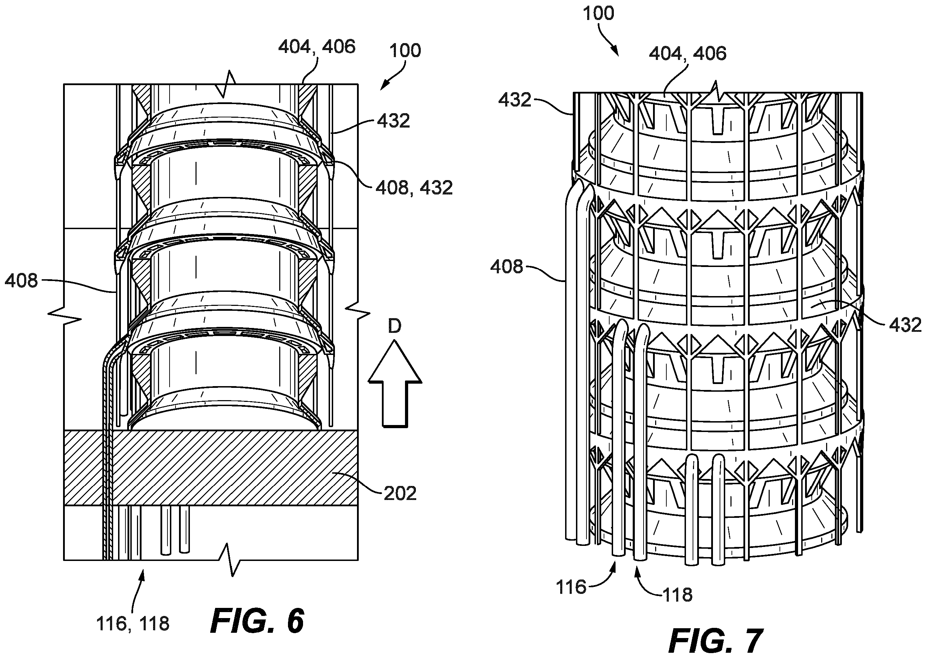

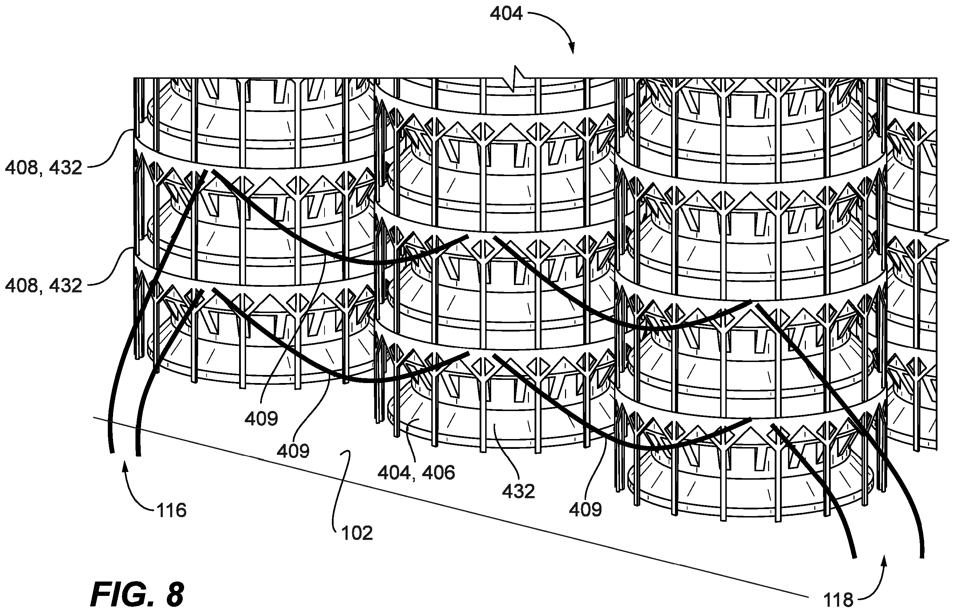

With reference now to Fig. 6, another build 404 is shown, wherein the work pieces 406, which are stacked vertically relative to the build direction D. Overhanging portions of the work pieces 406 can be supported during the build process by support structures 432. In this configuration, portions of the fluid channels 408 are incorporated into the support structures 432. Each level of support structure 432 is provided at a level in the build 404 to support a level of work piece (or work pieces) 406 within the build 404. An additional respective fluid channel 408 can be formed for each level of work pieces 406 above the first level in the build direction D. As shown in Fig. 7, these levels of the fluid channel 408 (or separate fluid channels 408 for each level), can each connect through respective fluid inlets/outlets 116, 118 for connection to a temperature controller 114 (as in Fig. 1). With reference to Fig. 8, portions of the fluid channel 408 at each level can be connected to one another in an end to end manner by connectors 409 to form a respective fluid circuit at each level in the build 404, wherein two levels of connectors 409 and fluid channels 408 are shown, to reduce the number of fluid inlets and outlets 116, 118 in the build plate 102. Removing the support structure 432 after completion of the build 404 also removes the fluid channels 408, e.g., to separate the work pieces 406 from the build 404.

While shown and described in the exemplary context of fluid channels, those skilled in the art, will readily appreciate that any suitable type of temperature control channel can be used, such as resistive or inductive heating or cooling elements (e.g., where a resistive or inductive heating or cooling element is inserted through the temperature control channel after the temperature control channel is formed). Software can be used to control the clearing of the fluid channels (e.g. removing unfused stock powder), as well as the heating/cooling control. For example, when the highest build layer of a fluid channel is complete, the software can cause the temperature controller 114 (shown in Fig. 1) to trigger a cleaning process. Once that is completed, the software can cause the temperature controller 114 to begin the heating or cooling process. The software and hardware for temperature controller 114 can be integrated into the additive manufacturing system 100 so that a build in progress need not be interrupted for the software process outlined above. The hardware of the temperature controller 114 can include powder removal devices, flow control valves, electronic controllers, heaters, and health monitoring devices such as thermocouples, pressure transducers, and ammeters. These can be built into the build plate 102.

The methods and systems of the present disclosure, as described above and shown in the drawings, provide for temperature control in additive manufacturing builds. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A method comprising:
beginning an additively manufactured build by depositing initial layers of the build (304, 404) a build plate (102);
additively manufacturing a temperature control channel (308, 408) as part of the build in progress;
flowing fluid through the temperature control channel (308, 408) while continuing to additively manufacture the build (304, 404) to provide temperature control for the build in progress; and
completing additive manufacture of the build (304, 404); and
**characterized by** additively manufacturing a support structure (432) into the build (304, 404) to provide support for an overhanging portion of the build (304, 404), wherein the support structure (432) includes a portion of the temperature control channel (308, 408).

2. The method as recited in claim 1, wherein the build in progress includes multiple work pieces (306, 406) in progress, and wherein additively manufacturing the temperature control channel includes forming the temperature control channel passing in a back and forth pattern between rows of the work pieces (306, 406) in progress.

3. The method as recited in claim 1 or 2, wherein additively manufacturing the temperature control channel (308, 408) includes building the temperature control channel (308, 408) one layer at a time while additively manufacturing the build (304, 404).

4. The method as recited in any preceding claim, wherein additively manufacturing the temperature control channel (308, 408) includes forming the temperature control channel (308, 408) with an inlet of the temperature control channel (308, 408) connected to a fluid inlet port (116) defined in the build plate (102), and forming the temperature control channel (308, 408) with an outlet of the temperature control channel (308, 408) connected to a fluid outlet port (118) defined in the build plate (102), wherein flowing fluid through the temperature control channel : (308, 408) includes flowing fluid into the temperature control channel (308, 408) through the fluid inlet port (116) and flowing fluid out of the temperature control channel (308, 408) through the fluid outlet port (118), and optionally further comprising removing powder within the temperature control channel (308, 408) by flowing fluid through the temperature control channel (308, 408) through the fluid inlet port (116) and removing powder through the fluid outlet port (118).

5. The method as recited in any preceding claim, wherein the temperature control channel (308, 408) is a first temperature control channel (308, 408), and further comprising: additively manufacturing at least one additional temperature control channel (308, 408) as part of the build (304, 404) in progress, wherein each of the temperature control channels (308, 408) is formed successively further and further from the build plate (102) to provide temperature control at successively higher levels in the build (304, 404) in progress, and optionally wherein each of the temperature control channels (308, 408) is formed in a respective additively manufactured build plate (102) formed as part of the build (304, 404), wherein at least one work piece is formed between respective ones of the build plate (102).

6. The method as recited in any preceding claim, further comprising forming, through additive manufacturing, thermally conductive connectors (328, 409) connecting between the temperature control channel (308, 408) and a portion (330) of the build (304, 404) spaced apart from the temperature control channel (308, 408) for heat transfer between the temperature control channel and the portion (330) of the build (304, 404)

7. The method as recited in any preceding claim, wherein additively manufacturing support structure (432) into the build (304, 404) includes forming multiple levels of support structure (432), each level of support structure (432) provided at a level in the build (304, 404) to support a level of work (306, 406) within the build, build (304, 404) wherein portions of the fluid channel (308, 408) at a first level are connected to one another in an end to end manner to form a respective fluid circuit, and/or further comprising forming an additional respective fluid channel (308, 408) for each level above the first level, and/or further comprising removing the support structure (432) after completion of the build. (304, 404)^{.}

8. The method as recited in any preceding claim, further comprising removing the temperature control channel (308, 408) from the build (304, 404) after completion of the build (304, 404)^{.}

9. An additive manufacturing system comprising:
a build platform (102);
a build (304, 404) additively manufactured onto the build platform (102), wherein the build includes a temperature control channel (308, 408); and
a temperature control system (114) operatively connected to the temperature control channel (308, 408) to control temperature of the build (304, 404);
**characterized by** a support structure (432) in the build (304, 404) to provide support for an overhanging portion of the build, wherein the support structure (432) includes a portion of the temperature control channel (308, 408).

10. The system as recited in claim 9, wherein the temperature control system (114) is in fluid communication with the temperature control channel (308, 408) to flow fluid therethrough to control temperature of the build (304, 404)^{.}

11. The system as recited in claim 10, further comprising at least one additional fluid circuit defined in the build (304, 404), wherein each of the fluid circuits is in fluid communication with the temperature control system (114) for circulating fluid therethrough, or
wherein the temperature control channel (308, 408) fluidly connects with the temperature control system (114) through a fluid inlet port (116) and a fluid outlet port (118), each defined in the build platform (102).

12. The system as recited in claim 11, wherein the temperature control system (114) is configured to remove powder within the temperature control channel (308, 408) by flowing fluid through the temperature control channel (308, 408) through fluid inlet port (116) and removing powder through the fluid outlet port (118).

13. The system as recited in any of claims 9 to 12, wherein the temperature control channel (308, 408) includes a resistive heating element, or wherein the temperature control channel (308, 408) includes an inductive heating element.

## Patentansprüche

1. Verfahren, umfassend:
Beginnen eines additiv hergestellten Aufbaus durch Aufbringen anfänglicher Schichten des Aufbaus (304, 404) auf eine Aufbauplatte (102);
additives Herstellen eines Temperaturregelungskanals (308, 408) als Teil des Aufbaus in Arbeit:
Strömenlassen von Fluid durch den Temperaturregelungskanal (308, 408), während die additive Herstellung des Aufbaus (304, 404) fortgesetzt wird, um eine Temperaturregelung für den Aufbau in Arbeit bereitzustellen; und
Abschließen der additiven Herstellung des Aufbaus (304, 404); und
**gekennzeichnet durch** die additive Herstellung einer Stützstruktur (432) in den Aufbau (304, 404), um einen überhängenden Abschnitt des Aufbaus (304, 404) zu stützen, wobei die Stützstruktur (432) einen Abschnitt des Temperaturregelungskanals (308, 408) beinhaltet.

2. Verfahren nach Anspruch 1, wobei der Aufbau in Arbeit mehrere in Arbeit befindliche Werkstücke (306, 406) beinhaltet, und wobei die additive Herstellung des Temperaturregelungskanals Bilden des Temperaturregelungskanals beinhaltet, der in einem Hin- und Her-Muster zwischen Reihen der Werkstücke (306, 406) in Arbeit verläuft.

3. Verfahren nach Anspruch 1 oder 2, wobei die additive Herstellung des Temperaturregelungskanals (308, 408) Aufbauen des Temperaturregelungskanals (308, 408) Schicht für Schicht beinhaltet, während der Aufbau (304, 404) additiv hergestellt wird.

4. Verfahren nach einem der vorhergehenden Ansprüche, wobei das additive Herstellen des Temperaturregelungskanals (308, 408) Bilden des Temperaturregelungskanals (308, 408) mit einem Einlass des Temperaturregelungskanals (308, 408), der mit einer in der Aufbauplatte (102) definierten Fluideinlassöffnung (116) verbunden ist, und Bilden des Temperaturregelungskanals (308, 408) mit einem Auslass des Temperaturregelungskanals (308, 408), der mit einer in der Aufbauplatte (102) definierten Fluidauslassöffnung (118) verbunden ist, beinhaltet, wobei das Strömen von Fluid durch den Temperaturregelungskanal (308, 408) Strömen von Fluid in den Temperaturregelungskanal (308, 408) durch die Fluideinlassöffnung (116) und Strömen von Fluid aus dem Temperaturregelungskanal (308, 408) durch die Fluidauslassöffnung (118) beinhaltet, und optional
ferner umfassend Entfernen von Pulver innerhalb des Temperaturregelungskanals (308, 408) durch Strömenlassen von Fluid durch den Temperaturregelungskanal (308, 408) durch die Fluideinlassöffnung (116) und Entfernen von Pulver durch die Fluidauslassöffnung (118).

5. Verfahren nach einem der vorhergehenden Ansprüche, wobei der Temperaturregelungskanal (308, 408) ein erster Temperaturregelungskanal (308, 408) ist, und ferner umfassend:
additives Herstellen mindestens eines zusätzlichen Temperaturregelungskanals (308, 408) als Teil des Aufbaus (304, 404) in Arbeit, wobei jeder der Temperaturregelungskanäle (308, 408) schrittweise weiter und weiter von der Aufbauplatte (102) entfernt gebildet wird, um eine Temperaturregelung auf schrittweise höheren Niveaus in dem Aufbau (304, 404) in Arbeit bereitzustellen, und optional
wobei jeder der Temperaturregelungskanäle (308, 408) in einer entsprechenden additiv hergestellten Aufbauplatte (102) ausgebildet ist, die als Teil des Aufbaus (304, 404) ausgebildet ist, wobei mindestens ein Werkstück zwischen entsprechenden Aufbauplatten (102) ausgebildet ist.

6. Verfahren nach einem der vorhergehenden Ansprüche, ferner umfassend Bilden von wärmeleitenden Verbindern (328, 409) durch additive Herstellung, die eine Verbindung zwischen dem Temperaturregelungskanal (308, 408) und einem Teil (330) des Aufbaus (304, 404) herstellen, der von dem Temperaturregelungskanal (308, 408) beabstandet ist, um Wärme zwischen dem Temperaturregelungskanal und dem Teil (330) des Aufbaus (304, 404) zu übertragen.

7. Verfahren nach einem der vorhergehenden Ansprüche, wobei das additive Herstellen der Stützstruktur (432) in den Aufbau (304, 404) Bilden mehrerer Niveaus der Stützstruktur (432) beinhaltet, wobei jedes Niveau der Stützstruktur (432) auf einem Niveau in dem Aufbau (304, 404) bereitgestellt wird, um ein Niveau der Arbeit (306, 406) innerhalb des Aufbaus (304, 404) zu unterstützen, wobei Abschnitte des Fluidkanals (308, 408) auf einem ersten Niveau miteinander in einer Ende-an-Ende-Weise verbunden sind, um einen jeweiligen Fluidkreislauf zu bilden, und/oder ferner umfassend Bilden eines zusätzlichen entsprechenden Fluidkanals (308, 408) für jedes Niveau oberhalb des ersten Niveaus, und/oder
ferner umfassend Entfernen der Stützstruktur (432) nach Abschluss des Aufbaus (304, 404).

8. Verfahren nach einem der vorhergehenden Ansprüche, ferner umfassend Entfernen des Temperaturregelungskanals (308, 408) aus dem Aufbau (304, 404) nach Abschluss des Aufbaus (304, 404) .

9. Additives Herstellungssystem, umfassend:
eine Aufbauplattform (102);
einen Aufbau (304, 404), der auf der Aufbauplattform (102) additiv hergestellt wird, wobei der Aufbau einen Temperaturregelungskanal (308, 408) beinhaltet, und
ein Temperaturregelungssystem (114), das betriebsmäßig mit dem Temperaturregelungskanal (308, 408) verbunden ist, um die Temperatur des Aufbaus (304, 404) zu regeln;
**gekennzeichnet durch** eine Stützstruktur (432) in dem Aufbau (304, 404), um einen überhängenden Abschnitt des Aufbaus zu stützen, wobei die Stützstruktur (432) einen Abschnitt des Temperaturregelungskanals (308, 408) beinhaltet.

10. System nach Anspruch 9, wobei das Temperaturregelungssystem (114) in Fluidverbindung mit dem Temperaturregelungskanal (308, 408) steht, um Fluid durch diesen strömen zu lassen, um die Temperatur des Aufbaus (304, 404) zu regeln.

11. System nach Anspruch 10, ferner umfassend mindestens einen zusätzlichen Fluidkreislauf, der in dem Aufbau (304, 404) definiert ist,
wobei jeder der Fluidkreisläufe in Fluidverbindung mit dem Temperaturregelungssystem (114) steht, um Fluid durch dieses zu zirkulieren, oder
wobei der Temperaturregelungskanal (308, 408) durch eine Fluideinlassöffnung (116) und eine Fluidauslassöffnung (118), die jeweils in der Aufbauplattform (102) definiert sind, eine Fluidverbindung mit dem Temperaturregelungssystem (114) herstellt.

12. System nach Anspruch 11, wobei das Temperaturregelungssystem (114) konfiguriert ist zum Entfernen von Pulver innerhalb des Temperaturregelungskanals (308, 408) durch Strömenlassen von Fluid durch den Temperaturregelungskanal (308, 408) durch die Fluideinlassöffnung (116) und Entfernen von Pulver durch die Fluidauslassöffnung (118).

13. System nach einem der Ansprüche 9 bis 12, wobei der Temperaturregelungskanal (308, 408) ein Widerstandsheizelement beinhaltet, oder wobei der Temperaturregelungskanal (308, 408) ein induktives Heizelement beinhaltet.

## Revendications

1. Procédé comprenant :
le début d'une construction fabriquée de manière additive en déposant des couches initiales de la construction (304, 404) sur une plaque de construction (102) ;
la fabrication additive d'un canal (308, 408) de contrôle de la température en tant que partie de la construction en cours ;
l'écoulement d'un fluide à travers le canal (308, 408) de contrôle de la température tout en continuant à fabriquer de manière additive la construction (304, 404) pour fournir un contrôle de la température pour la construction en cours ; et
l'achèvement de la fabrication additive de la construction (304, 404) ; et
**caractérisé par** la fabrication additive d'une structure de support (432) dans la construction (304, 404) pour fournir un support pour une portion qui surplombe de la construction (304, 404), dans lequel la structure de support (432) comporte une portion du canal (308, 408) de contrôle de la température.

2. Procédé selon la revendication 1, dans lequel la construction en cours comporte plusieurs pièces à usiner (306, 406) en cours, et dans lequel la fabrication additive du canal de contrôle de la température comporte la formation du canal de contrôle de la température passant en un motif de va-et-vient entre des rangées des pièces à usiner (306, 406) en cours.

3. Procédé selon la revendication 1 ou 2, dans lequel la fabrication additive du canal (308, 408) de contrôle de la température comporte la construction du canal (308, 408) de contrôle de la température une couche à la fois tout en fabriquant de manière additive la construction (304, 404).

4. Procédé selon une quelconque revendication précédente, dans lequel la fabrication additive du canal (308, 408) de contrôle de la température comporte la formation du canal (308, 408) de contrôle de la température avec une entrée du canal (308, 408) de contrôle de la température reliée à un orifice d'entrée de fluide (116) défini dans la plaque de construction (102), et la formation du canal (308, 408) de contrôle de la température avec une sortie du canal (308, 408) de contrôle de la température reliée à un orifice de sortie de fluide (118) défini dans la plaque de construction (102), dans lequel l'écoulement d'un fluide à travers le canal (308, 408) de contrôle de la température comporte l'écoulement d'un fluide dans le canal (308, 408) de contrôle de la température par l'intermédiaire de l'orifice d'entrée de fluide (116) et l'écoulement d'un fluide hors du canal (308, 408) de contrôle de la température par l'intermédiaire de l'orifice de sortie de fluide (118), et éventuellement comprenant en outre le retrait d'une poudre dans le canal (308, 408) de contrôle de la température en faisant s'écouler un fluide à travers le canal (308, 408) de contrôle de la température par l'intermédiaire de l'orifice d'entrée de fluide (116) et le retrait d'une poudre par l'intermédiaire de l'orifice de sortie de fluide (118).

5. Procédé selon une quelconque revendication précédente, dans lequel le canal (308, 408) de contrôle de la température est un premier canal (308, 408) de contrôle de la température, et comprenant en outre :
la fabrication additive d'au moins un canal (308, 408) de contrôle de la température supplémentaire en tant que partie de la construction (304, 404) en cours, dans lequel chacun des canaux (308, 408) de contrôle de la température est formé successivement de plus en plus loin de la plaque de construction (102) pour fournir un contrôle de la température à des niveaux successivement plus élevés dans la construction (304, 404) en cours, et éventuellement dans lequel chacun des canaux (308, 408) de contrôle de la température est formé dans une plaque de construction (102) fabriquée de manière additive respective formée en tant que partie de la construction (304, 404), dans lequel au moins une pièce à usiner est formée entre des respectives de la plaque de construction (102).

6. Procédé selon une quelconque revendication précédente, comprenant en outre la formation, par l'intermédiaire de la fabrication additive, de connecteurs thermoconducteurs (328, 409) reliant le canal (308, 408) de contrôle de la température et une portion (330) de la construction (304, 404) espacée du canal (308, 408) de contrôle de la température pour un transfert de chaleur entre le canal de contrôle de la température et la portion (330) de la construction (304, 404).

7. Procédé selon une quelconque revendication précédente, dans lequel la fabrication additive d'une structure de support (432) dans la construction (304, 404) comporte la formation de plusieurs niveaux de structure de support (432), chaque niveau de structure de support (432) étant fourni à un niveau dans la construction (304, 404) pour supporter un niveau de travail (306, 406) dans la construction, construction (304, 404) dans lequel des portions du canal (308, 408) de fluide à un premier niveau sont reliées les unes aux autres bout à bout pour former un circuit de fluide respectif, et/ou comprenant en outre la formation d'un canal (308, 408) de fluide respectif supplémentaire pour chaque niveau au-dessus du premier niveau, et/ou comprenant en outre le retrait de la structure de support (432) après l'achèvement de la construction (304, 404).

8. Procédé selon une quelconque revendication précédente, comprenant en outre le retrait du canal (308, 408) de contrôle de la température de la construction (304, 404) après l'achèvement de la construction (304, 404).

9. Système de fabrication additive comprenant :
une plateforme de construction (102) ;
une construction (304, 404) fabriquée de manière additive sur la plateforme de construction (102), dans lequel la construction comporte un canal (308, 408) de contrôle de la température ; et
un système de contrôle de la température (114) relié de manière fonctionnelle au canal (308, 408) de contrôle de la température pour contrôler la température de la construction (304, 404) ;
**caractérisé par** une structure de support (432) dans la construction (304, 404) pour fournir un support pour une portion qui surplombe de la construction, dans lequel la structure de support (432) comporte une portion du canal (308, 408) de contrôle de la température.

10. Système selon la revendication 9, dans lequel le système de contrôle de la température (114) est en communication de fluide avec le canal (308, 408) de contrôle de la température pour faire s'écouler un fluide à travers celui-ci pour contrôler la température de la construction (304, 404).

11. Système selon la revendication 10, comprenant en outre au moins un circuit de fluide supplémentaire défini dans la construction (304, 404), dans lequel chacun des circuits de fluide est en communication de fluide avec le système de contrôle de la température (114) pour faire circuler un fluide à travers celui-ci, ou dans lequel le canal (308, 408) de contrôle de la température est relié de manière fluidique au système de contrôle de la température (114) par l'intermédiaire d'un orifice d'entrée de fluide (116) et d'un orifice de sortie de fluide (118), chacun étant défini dans la plateforme de construction (102).

12. Système selon la revendication 11, dans lequel le système de contrôle de la température (114) est conçu pour retirer une poudre dans le canal (308, 408) de contrôle de la température en faisant s'écouler un fluide à travers le canal (308, 408) de contrôle de la température par l'intermédiaire de l'orifice d'entrée de fluide (116) et en retirant une poudre par l'intermédiaire de l'orifice de sortie de fluide (118).

13. Système selon l'une quelconque des revendications 9 à 12, dans lequel le canal (308, 408) de contrôle de la température comporte un élément chauffant résistif, ou dans lequel le canal (308, 408) de contrôle de la température comporte un élément chauffant inductif.
